# EUROPEAN PATENT SPECIFICATION

(11) **EP 3 062 903 B1**
(45) Date of publication and mention of the grant of the patent: **28.06.2017**
(21) Application number: 13788925.9
(22) Date of filing: 30.10.2013
(51) Int. Cl.: B01D 25/38

(54) **APPARATUS FOR TREATING A PLANAR SURFACE, FILTER DEVICE AND METHOD FOR OPERATING THE SAME**
VORRICHTUNG ZUR BEHANDLUNG EINER EBENEN FLÄCHE, FILTERVORRICHTUNG UND VERFAHREN ZUM BETRIEB DAVON
APPAREIL POUR TRAITER UNE SURFACE PLANE, DISPOSITIF DE FILTRE ET PROCÉDÉ DE FONCTIONNEMENT

(43) Date of publication of application: 07.09.2016
(73) Proprietor: Outotec (Finland) Oy, 02230 Espoo (FI)
(72) Inventor: BÖHNKE, Bernd, 40547 Düsseldorf (DE)
(74) Representative: Bauer, Dirk
(86) International application number: PCT/EP2013/072709
(87) International publication number: WO 2015/062647

(56) References cited:
- EP-A2- 0 237 869
- DE-A1- 2 630 575
- FR-A1- 2 983 084
- US-A- 4 448 221
- US-A- 4 553 558

## Description

### TECHNICAL FIELD

The invention relates in general to treating planar rectangular surfaces, and in particular to cleaning the filter cloths in press filter devices.

### BACKGROUND ART

In press filter devices, filter chambers are formed between adjacent recess plates. For filtering, a suspension is charged into the filter chambers, wherein one or two filter cloths allow a liquid fraction of the suspension to pass as a filtrate, and a solid content of the suspension to deposit on the filter cloths as a filter cake. After filtering operation, a clearance between adjacent recess plates is established by displacing the recess plates, for discharging the filter cake and further cleaning or even replacing the filter cloths, if required.

It is commonly known e.g. from press filter devices provided by *Andritz Separation, Graz*/*AU* to provide a cleaning apparatus, that inserts a horizontal treatment bar into the open filter chamber. The treatment bar spans over the total width of the filter chamber and slides over its total height for cleaning the filter cloth from remainders of the filter cake. The treatment bar has spray nozzles and is charged with a cleaning fluid under pressure up to 100 *bar.*

In further background of the invention, curves of constant width (e.g. Reuleaux triangles), as well as gear drives for rotating the same are commonly known.

### PROBLEM TO BE SOLVED

It is an object of the invention to provide an apparatus for easily treating a planar, square surface, in particular for cleaning filter cloths in press filter devices.

### SUMMARY OF INVENTION

The invention suggests an apparatus comprising a support frame, a gear drive, and a treatment bar that is moveable parallel to a planar surface, when the gear drive is positioned over the surface, and a drive unit for moving the treatment bar, wherein the gear drive comprises a central wheel, an intermediate wheel engaging with the central wheel, a bar driving wheel engaging with the intermediate wheel, and a flange carrying the intermediate wheel and the bar driving wheel, wherein the central wheel is fixed to the support frame, and the flange is attached to the support frame being revolvable around a pivot point of the central wheel, wherein the treatment bar is fixed to the bar driving wheel and protrudes radially from a pivot point of the bar driving wheel, wherein a radius of the bar driving wheel is three times a radius of the central wheel, and wherein a length of the treatment bar is between three and eight times a flange radius from the pivot point of the central wheel to the pivot point of the bar driving wheel.

The gear drive of the apparatus according to the invention allows for rotating a Reuleaux triangle fitting inside a square area: The Reuleaux triangle is commonly known at least from the "Equilateral Triangle" discussed in *Reuleaux, F.: Outlines of a Theory of Machines. Macmillan, London 1876, § 23.*

In particular, the secant length of the largest Reuleaux triangle inside a square area is the edge length a of the area. With triangle radius (i.e. the distance from it's center to any corner of the triangle) *l*, the basic formula in an equilateral triangle is *l* = *a*/sqrt(3), and the gear drive condition is *a* = 2(*l*-*r*)*.* Considering both, the flange radius *r* is about the seventh part of the triangle radius *l*-exactly: *l*/*r* = 4 + 2sqrt(3): This relation will be referred to as "Reuleaux ratio" in the following.

With the same length *l*, the tip of the treatment bar marks a trace that touches the border line of the square surface at about 70 per cent of it's length, with rounded corners formed by ellipse segments. Increasing the ratio of dimensions enlarges the radii in the surface corners, in extremum approximating a perfect circle, inscribed into the square surface.

Decreasing the ratio of the length of the treatment bar and the flange radius improves approximation of corners, while detaching the trace of the bar from the border of the square surface. With the length of the treatment bar at three times the flange radius, the trace has sharp corners.

Depending on the intended treatment of any square surface, selection of the ratio between about 3 and 8 requires balancing the coverage of the corners, coverage of the area alongside the borders of surface, or overlap of the bar at the borders:
The Reuleaux ratio or some value around the same is a good choice for cleaning the floor of a square based container, including the edges. The remaining corners may be finished manually, or with the apparatus according to the invention having a ratio of about 3 to 4.

Raking through a liquid stored inside the same container for collecting particulate matter with an apparatus according to the invention - where exactly reaching the borders has minor relevance - is more effective at a ratio of 4 to 6.

In a press filter device, a square soiled area of a filter cloth should be processed in one cycle with only one apparatus according to the invention: Aiming at touching both the border of the square surface - i.e *a* = 2(*l-r*) *-* and the corners of the square surface - i.e. *a* = (*l* + *r*)sqrt(2) - results to a flange radius at about the tenth part of the edge length a - exactly: *r*/*a* = (sqrt(2) - 1)/4, and a ratio of slightly below 6 - exactly: *l*/*r* = 3 + 2sqrt(2) - that minimizes an overlap of the treatment bar into the unsoiled border of the soiled area.

In an apparatus according to the invention, the drive unit is preferably mounted to the apparatus, and drives the flange by a transmission means, such as a v-belt drive, a chain drive, or a cardan-shaft drive. The transmission means bridges over the support frame from a base element to the flange. The support frame with the gear drive and the treatment bar may thus more easily be inserted into the filter chamber, while the drive unit remains outside the filter chamber. The drive unit and the respective electric supply can easily be kept from being soiled with both remainders of the filter cake, and with a cleaning liquid.

In an alternative apparatus according to the invention, the drive unit is attached to the support frame and drives the flange. In such apparatus, the weight of the drive unit is supported by the frame, and does not influence the movement of the flange. In a further alternative apparatus according to the invention, a (preferably smaller) drive unit may be attached to the flange and driving the intermediate wheel. In both alternatives, transmission of power from the drive unit to the driven element, is simplified.

Further preferred, the drive unit in an apparatus according to the invention is an electric motor. Electric motors are standard units available in a wide range of power and drive specifications, at low costs due to mass production.

Further preferred, the central wheel, the intermediate wheel and the bar driving wheel in an apparatus according to the invention are cogwheels. Cogwheels provide for exact and repeatable transmission.

Further preferred, the treatment bar in an apparatus according to the invention carries cleaning elements. Such apparatus is appropriate for cleaning treatment of the surface.

Further preferred, an apparatus according to the invention features an actuator for positioning the gear drive. By subsequently positioning the gear drive, such apparatus provides for cleaning other rectangular (non-square) surfaces.

Further preferred, the length of the treatment bar, and/or the flange radius in an apparatus according to the invention is adjustable.

The invention further suggests a filter device having a stationary head piece and a movable end piece, a pack of recess plates between the head piece and the end piece, the recess plates having recesses, that form filter chambers between the recess plates, and at least one filter cloth separating the filter chambers, for retaining as a filter cake a solid content of a suspension to be charged into the filter chambers, and allowing a remaining liquid fraction of the suspension to pass as a filtrate, having at least one apparatus according to the invention for cleaning the at least one filter cloth. Such filter device provides for automated cleaning of the filter cloth and reduced time of nonuse.

The apparatus according to the invention may in particular be introduced between the recess plates, for cleaning the filter cloth without removing the same from the filter chambers.

The invention further suggests a method for operating a filter device according to the invention, wherein the at least one apparatus, after opening the filter chambers, is one after the other positioned into the filter chambers for cleaning the at least one filter cloth therein. Such operating a filter device according to the invention requires minimum additional assembly.

The invention further suggests a similar method, wherein the apparatuses, after opening the filter chambers, are simultaneously positioned into the respective filter chambers for cleaning the at least one filter cloth therein. Such operating a filter device according to the invention further reduces down time.

### BEST MODE FOR CARRYING OUT THE INVENTION

The apparatus and filter device according to the invention and the associated method are subsequently described in more detail with reference to preferred embodiment illustrated in the drawing figures.
- Fig. 1: shows a detail of a filter device according to the invention,
- fig. 2: shows the gear drive of the filter device,
- fig. 3a-f: show traces of the tips of treatment bars in further apparatuses according to the invention, and
- fig. 4: shows positions of the treatment bar in jet another apparatus according to the invention.

A filter device according to the invention has a stationary head piece and a movable end piece, and a pack of recess plates between the head piece and the end piece. The recess plates have approximately square shaped recesses, that form filter chambers between the recess plates. The filter device has one filter cloth 1 for separating the filter chambers, retaining as a filter cake a solid content of a suspension that is charged into the filter chambers, and allowing a remaining liquid fraction of the suspension to pass as a filtrate.

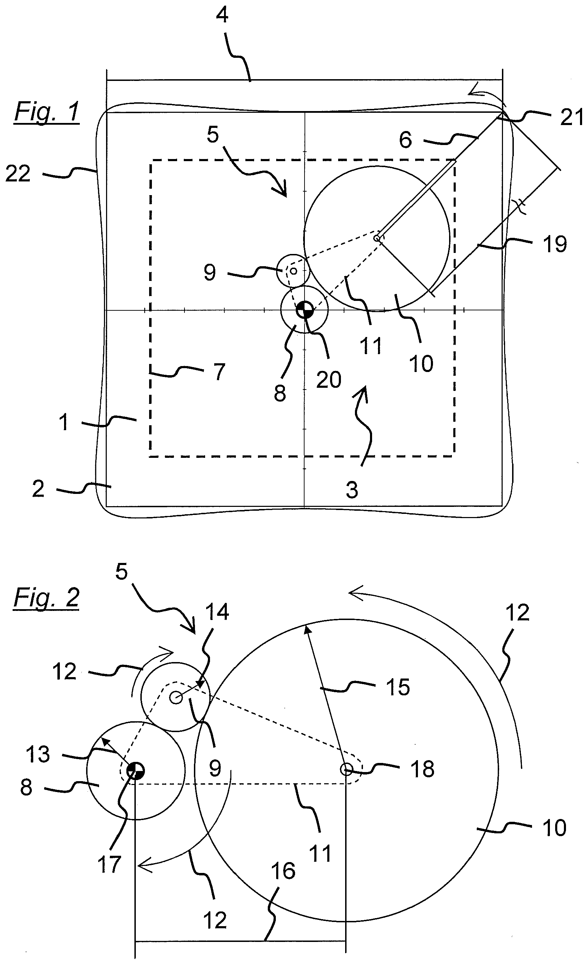

In filtering operation of the filter device, a partial square surface 2 as in fig. 1 of the filter cloth 1 is soiled by the filter cake, and remainders of the filter cake removed from the surface 2 by means of an apparatus 3 according to the invention. Apart from the surface 2, no further details of the filter device are shown.

The surface 2 has an edge length 4 of 1.5 m. The apparatus 3 comprises a support frame (unshown), a gear drive 5, and a treatment bar 6. In fig. 1, the center area 7 of the surface 2 showing the gear drive 5 is enlarged.

The gear drive 5 has a central wheel 8, an intermediate wheel 9, a bar driving wheel 10, and a flange 11, all made from stainless steel, and an electric motor (not shown). Fig. 2 shows in detail the gear drive 5 and rotating directions 12 of the intermediate wheel 9, the flange 11 and the bar driving wheel 10:
The central wheel 8, the intermediate wheel 9 and the bar driving wheel 10 are cogwheels. The central wheel 8 has a radius 13 of 3.8 *cm* and is fixed to the support frame, thus not rotating. The intermediate wheel 9 has a radius 14 of 2.5 *cm,* engages with the central wheel 8, and is fixed to the flange 11. The bar driving wheel 10 has a radius 15 of 11.4 *cm,* engages with the intermediate wheel 9, and is also fixed to the flange 11.

A flange radius 16 from the pivot point 17 of the central wheel 8 to the pivot point 18 of the bar driving wheel 10 measures 15,53 *cm.* The electric motor is attached to a base element of the apparatus and drives the flange 11 by a v-belt drive, that bridges over the support frame. The flange 11, together with the intermediate wheel 9 and with the bar driving wheel 10, revolves around the pivot point 17 of the central wheel 8.

The treatment bar 6 is a pipe made from stainless steel, has a length 19 of 90,53 *cm,* comprises spray nozzles (not shown) as cleaning elements, and is fixed to the bar driving wheel 10, protruding radially from it's pivot point 18, and rotates with the bar driving wheel 10 around the same.

After filtering operation of the filter device, the filter chambers are opened, and the apparatus 3 one after the other positioned into the filter chambers for cleaning the soiled surface 2 of the filter cloth 1:
In each filter chamber, the gear drive 5 is positioned with the pivot point 17 of the central wheel 8 over the center 20 of the surface 2. The flange 11 is actuated clockwise by the drive unit and revolves with 3 *rpm* around the center. The treatment bar 6 rotates with 1 *rpm* around the pivot point 18 of the bar driving wheel 10. A single cleaning cycle thus takes one minute. In one cleaning cycle, the tip 21 of the treatment bar 6 marks a trace 22 on the onsoiled border of the filter cloth 1 outside the surface 2.

In cleaning operation of filter device, washing water is provided under pressure through the treatment bar 6, and through the spray nozzles onto the surface 2, for washing the filter cake from the filter cloth 1.

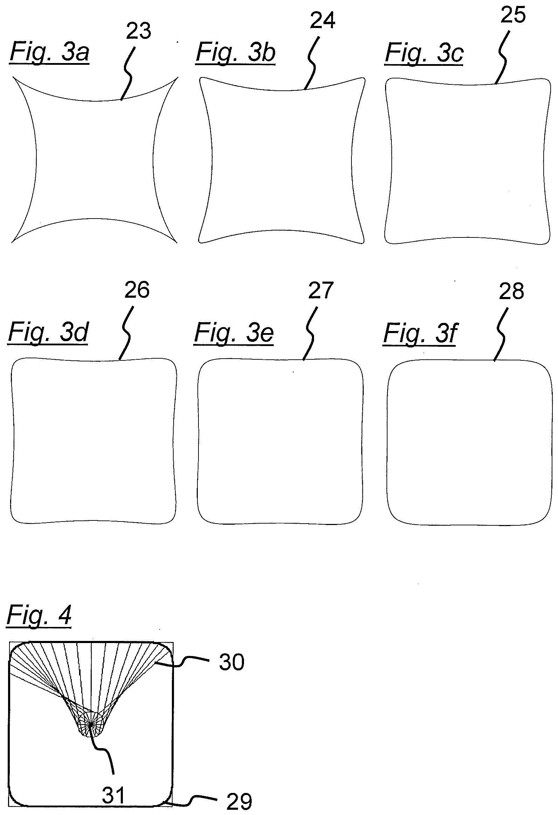

Figure 3a to 3g show similar traces 23-29 in other six apparatuses according to the invention, wherein the ratio of the length of the treatment bar and the flange radius 16 is 3, 4, 5, 6, 7 or 8.

Figure 4 shows a similar trace 30 in jet another apparatus according to the invention, wherein this ratio is the Reuleaux ratio, and a series of positions 30 of the treatment bar where the flange 11 makes one full circle around the pivot point 31 of the central wheel.

In the figures are
- 1: Filter cloth
- 2: Surface
- 3: Apparatus
- 4: Edge length
- 5: Gear drive
- 6: Treatment bar
- 7: Center area
- 8: Central wheel
- 9: Intermediate wheel
- 10: Bar driving wheel
- 11: Flange
- 12: Rotating direction
- 13: Radius
- 14: Radius
- 15: Radius
- 16: Flange radius
- 17: Pivot point
- 18: Pivot point
- 19: Length
- 20: Center
- 21: Tip
- 22: Trace
- 23: Trace
- 24: Trace
- 25: Trace
- 26: Trace
- 27: Trace
- 28: Trace
- 29: Trace
- 30: Position
- 31: Pivot point

## Claims

1. An apparatus (3) comprising a support frame, a gear drive (5), and a treatment bar (6) that is moveable parallel to a planar surface (2), when the gear drive (5) is positioned over the surface (2), and a drive unit for moving the treatment bar (6),
a. wherein the gear drive (5) comprises a central wheel (8), an intermediate wheel (9) engaging with the central wheel (8), a bar driving wheel (10) engaging with the intermediate wheel (9), and a flange (11) carrying the intermediate wheel (9) and the bar driving wheel (10),
b. wherein the central wheel (8) is fixed to the support frame, and the flange (11) is attached to the support frame being revolvable around a pivot point (17, 31) of the central wheel (8),
c. wherein the treatment bar (6) is fixed to the bar driving wheel (10) and protrudes radially from a pivot point (18) of the bar driving wheel (10),
d. wherein a radius of the bar driving wheel (10) is three times a radius of the central wheel (8), and
e. wherein a length of the treatment bar (6) is between three and eight times a flange radius (16) from the pivot point (17, 31) of the central wheel (8) to the pivot point (18) of the bar driving wheel (10).

2. An apparatus (3) according to the preceding claim, ***characterized in that*** the drive unit is mounted to the apparatus, and drives the flange (11) by a transmission means.

3. An apparatus (3) according to one of the preceding claims, ***characterized in that*** the drive unit is an electric motor.

4. An apparatus (3) according to one of the preceding claims, ***characterized in that*** the central wheel (8), the intermediate wheel (9) and the bar driving wheel (10) are cogwheels.

5. An apparatus (3) according to one of the preceding claims, ***characterized in that*** the treatment bar (6) carries cleaning elements.

6. An apparatus according to one of the preceding claims, ***characterized by*** an actuator for positioning the gear drive (5).

7. An apparatus according to one of the preceding claims, ***characterized in that*** the length of the treatment bar (6), and/or the flange radius is adjustable.

8. A filter device having a stationary head piece and a movable end piece, a pack of recess plates between the head piece and the end piece, the recess plates having recesses, that form filter chambers between the recess plates, and at least one filter cloth (1) separating the filter chambers, for retaining as a filter cake a solid content of a suspension to be charged into the filter chambers, and allowing a remaining liquid fraction of the suspension to pass as a filtrate, ***characterized by*** at least one apparatus (3) according to one of the preceding claims for cleaning the at least one filter cloth (1).

9. A method for operating a filter device according to the preceding claim, ***characterized in that*** the at least one apparatus (3), after opening the filter chambers, is one after the other positioned into the filter chambers for cleaning the at least one filter cloth (1) therein.

10. A method according to the preamble of the preceding claim, ***characterized in that*** the apparatuses, after opening the filter chambers, are simultaneously positioned into the respective filter chambers for cleaning the at least one filter cloth (1) therein.

## Patentansprüche

1. Vorrichtung (3), umfassend einen Trägerrahmen, ein Zahnradgetriebe (5) und eine Bearbeitungsstange (6), die parallel zu einer ebenen Oberfläche (2) beweglich ist, wenn das Zahnradgetriebe (5) über der Oberfläche (2) positioniert ist, und eine Antriebseinheit zum Bewegen der Bearbeitungsstange (6),
a. wobei das Zahnradgetriebe (5) ein Zentralrad (8), ein Zwischenrad (9), das mit dem Zentralrad (8) in Eingriff ist, ein die Bearbeitungsstange (6) antreibendes Rad (10), das mit dem Zwischenrad (9) in Eingriff ist, und einen Flansch (11) umfasst, der das Zwischenrad (9) und das die Bearbeitungsstange (6) antreibende Rad (10) trägt,
b. wobei das Zentralrad (8) an dem Trägerrahmen befestigt ist, und der Flansch (11) an dem Trägerrahmen um einen Drehpunkt (17, 31) des Zentralrads (8) drehbar angebracht ist,
c. wobei die Bearbeitungsstange (6) an dem die Bearbeitungsstange (6) antreibenden Rad (10) befestigt ist und radial von einem Drehpunkt (18) des die Bearbeitungsstange (6) antreibenden Rads (10) auskragt,
d. wobei ein Radius des die Bearbeitungsstange (6) antreibenden Rads (10) dreimal so groß wie ein Radius des Zentralrads (8) ist, und
e. wobei eine Länge der Bearbeitungsstange (6) zwischen drei- und achtmal so groß ist wie ein Flanschradius (16) von dem Drehpunkt (17, 31) des Zentralrads (8) zu dem Drehpunkt (18) des die Bearbeitungsstange (6) antreibenden Rads (10).

2. Vorrichtung (3) nach dem vorstehenden Anspruch, ***dadurch gekennzeichnet,* dass** die Antriebseinheit an die Vorrichtung montiert ist, und den Flansch (11) durch ein Übertragungsmittel antreibt.

3. Vorrichtung (3) nach einem der vorstehenden Ansprüche, ***dadurch gekennzeichnet,* dass** die Antriebseinheit ein Elektromotor ist.

4. Vorrichtung (3) nach einem der vorstehenden Ansprüche, ***dadurch gekennzeichnet,* dass** das Zentralrad (8), das Zwischenrad (9) und das die Bearbeitungsstange (6) antreibende Rad (10) Zahnräder sind.

5. Vorrichtung (3) nach einem der vorstehenden Ansprüche, ***dadurch gekennzeichnet,* dass** die Bearbeitungsstange (6) Reinigungselemente trägt.

6. Vorrichtung nach einem der vorstehenden Ansprüche, ***gekennzeichnet durch*** ein Stellglied zum Positionieren des Zahnradgetriebes (5).

7. Vorrichtung nach einem der vorstehenden Ansprüche, ***dadurch gekennzeichnet,* dass** die Länge der Bearbeitungsstange (6) und/oder der Flanschradius anpassbar ist.

8. Filtervorrichtung mit einem stationären Kopfteil und einem beweglichen Endteil, einem Stapel von Filterplatten zwischen dem Kopfteil und dem Endteil, wobei die Filterplatten Vertiefungen aufweisen, die Filterkammern zwischen den Filterplatten bilden, und mit mindestens einem Filtertuch (1), das die Filterkammern trennt, eine Fracht aus einer in die Filterkammern einzuleitenden Suspension als Filterkuchen zurückhält und einer verbleibenden flüssigen Fraktion der Suspension erlaubt, als Filtrat hindurch zu gelangen, ***gekennzeichnet durch*** mindestens eine Vorrichtung (3) nach einem der vorstehenden Ansprüche zum Reinigen des mindestens einen Filtertuchs (1).

9. Verfahren zum Betreiben einer Filtervorrichtung nach dem vorstehenden Anspruch, ***dadurch gekennzeichnet,* dass** die mindestens eine Vorrichtung (3) nach Öffnen der Filterkammern, in einer der Filterkammern nach der anderen zum Reinigen des mindestens einen darin angeordneten Filtertuchs (1) positioniert wird.

10. Verfahren gemäß dem Oberbegriff des vorstehenden Anspruchs, ***dadurch gekennzeichnet, dass*** die Vorrichtungen nach Öffnen der Filterkammern, gleichzeitig in den jeweiligen Filterkammern zum Reinigen des mindestens einen jeweils darin angeordneten Filtertuchs (1) positioniert werden.

## Revendications

1. Appareil (3) comprenant un châssis de support, un entraînement par engrenages (5), et une barre de traitement (6) qui est mobile parallèlement à une surface plane (2), quand l'entraînement par engrenages (5) est positionné sur la surface (2), et une unité d'entraînement pour agiter la barre de traitement (6),
a. dans lequel l'entraînement par engrenages (5) comprend une roue centrale (8), une roue intermédiaire (9) engrenant avec la roue centrale (8), une roue d'entraînement de barre (10) engrenant avec la roue intermédiaire (9), et une bride (11) portant la roue intermédiaire (9) et la roue d'entraînement de barre (10),
b. dans lequel la roue centrale (8) est fixée au châssis de support, et la bride (11) est attachée au châssis de support pouvant tourner autour d'un point de pivot (17, 31) de la roue centrale (8),
c. dans lequel la barre de traitement (6) est fixée à la roue d'entraînement de barre (10) et fait saillie de façon radiale à partir d'un point de pivot (18) de la roue d'entraînement de barre (10),
d. dans lequel un rayon de la roue d'entraînement de barre (10) est trois fois un rayon de la roue centrale (8), et
e. dans lequel une longueur de la barre de traitement (6) est entre trois et huit fois un rayon de bride (16) à partir du point de pivot (17, 31) de la roue centrale (8) jusqu'au point de pivot (18) de la roue d'entraînement de barre (10).

2. Appareil (3) selon la revendication précédente, ***caractérisé en ce que*** l'unité d'entraînement est montée sur l'appareil, et entraîne la bride (11) par un moyen de transmission.

3. Appareil (3) selon l'une des revendications précédentes, ***caractérisé en ce que*** l'unité d'entraînement est un moteur électrique.

4. Appareil (3) selon l'une des revendications précédentes, ***caractérisé en ce que*** la roue centrale (8), la roue intermédiaire (9) et la roue d'entraînement de barre (10) sont des roues dentées.

5. Appareil (3) selon l'une des revendications précédentes, ***caractérisé en ce que*** la barre de traitement (6) porte des éléments de nettoyage.

6. Appareil selon l'une des revendications précédentes, ***caractérisé par*** un dispositif d'actionnement pour positionner l'entraînement par engrenages (5).

7. Appareil selon l'une des revendications précédentes, ***caractérisé en ce que*** la longueur de la barre de traitement (6), et/ou le rayon de bride sont réglables.

8. Dispositif de filtration ayant une pièce de tête immobile et une pièce d'extrémité mobile, un pile de plaques filtrantes entre la pièce de tête et la pièce d'extrémité, les plaques filtrantes ayant des parties en retrait qui forment des chambres de filtre entre les plaques filtrantes, et au moins un tissu filtrant (1) séparant les chambres de filtre, pour retenir en tant que gâteau de filtration un contenu solide d'une suspension à charger dans les chambres de filtre, et permettre à une fraction liquide restante de la suspension de passer en tant que filtrat, ***caractérisé par*** au moins un appareil (3) selon l'une des revendications précédentes pour nettoyer le au moins un tissu filtrant (1).

9. Procédé pour mettre en oeuvre un dispositif de filtration selon la revendication précédente, ***caractérisé en ce que*** le au moins un appareil (3), après ouverture des chambres de filtre, est l'un après l'autre positionné dans les chambres de filtre pour nettoyer le au moins un tissu filtrant (1).

10. Procédé selon le préambule de la revendication précédente, ***caractérisé en ce que*** les appareils, après ouverture des chambres de filtre, sont positionnés simultanément dans les chambres de filtre respectives pour nettoyer le au moins un tissu filtrant (1).
